# FASCICULE DE BREVET EUROPEEN

(11) **EP 2 494 366 B1**
(45) Date de publication et mention de la délivrance du brevet: **21.08.2019**
(21) Numéro de dépôt: 10768945.7
(22) Date de dépôt: 26.10.2010
(51) Int. Cl.: G01P 13/02, G01C 22/02, A63B 24/00

(54) **SYSTEME ET PROCEDE DE COMPTAGE DE CHANGEMENTS DE DIRECTION D'UNE PERSONNE**
SYSTEM UND VERFAHREN ZUR ZÄHLUNG DER RICHTUNGSÄNDERUNGEN EINER PERSON
SYSTEM AND METHOD FOR COUNTING THE CHANGES IN DIRECTION OF A PERSON

(30) Priorité: 26.10.2009 FR 0957502
(43) Date de publication de la demande: 05.09.2012
(73) Titulaire: Movea S.A, 38000 Grenoble (FR); Commissariat à l'Énergie Atomique et aux Énergies Alternatives, 75015 Paris (FR)
(72) Inventeur: CARITU, Yanis, Saint Joseph De Riviere 38134 (FR); FLAMENT, Bruno, F-38134 Saint Julien De Ratz (FR); GODIN, Christelle, F-38190 Brignoud (FR)
(74) Mandataire: Brunelli, Gérald
(86) Numéro de dépôt international: PCT/EP2010/066099
(87) Numéro de publication internationale: WO 2011/051245

(56) Documents cités:
- JP-A- 2002 196 055
- US-A1- 2006 098 772
- US-A1- 2007 293 374
- US-B2- 6 543 146

## Description

L'invention porte sur un système de comptage de changements de direction d'une personne, et particulièrement d'allers-retours ou retournements d'un nageur dans une piscine.

Il existe des systèmes de comptage de changements de direction d'une personne, par exemple comme décrit dans la demande de brevet WO2004/038336 qui décrit un système comportant un magnétomètre. Les changements de direction d'une personne sont détectés lorsque les mesures du magnétomètre changent de valeur. D'autre part un magnétomètre seul ne permet pas l'élimination des mouvements parasites autres que les changements de direction dans le plan horizontal. Ce système n'utilise que les données issues du magnétomètre, qui peuvent être perturbées. Par conséquent, il est de fiabilité limitée.

Dans le cadre de la natation, de nombreux nageurs veulent pouvoir évaluer précisément la distance qu'ils ont parcourue lors d'une séance de natation. Le fait de devoir compter le nombre de longueurs ou de d'allers-retours parcourus est fastidieux, comporte un risque d'erreur non négligeable, et pour un nageur de bon niveau, peut le perturber et limiter sa performance.

Il existe des systèmes permettant de compter automatiquement les longueurs nagées, par exemple comme décrit dans la demande de brevet américaine US 2007/0293374A1. Cette demande décrit un compteur d'allers-retours de piscine dans un boîtier attaché au nageur par des moyens de fixation comprenant un capteur compas fournissant un signal qui change en fonction d'un sens aller ou d'un sens retour du nageur dans la piscine. Ce compteur d'allers-retours pour un nageur, comprend un boîtier, des moyens de fixation du boîtier sur le nageur, un capteur compas interne au boîtier pour fournir un signal de sortie qui change en fonction de la direction aller ou retour du nageur dans la piscine, et un processeur programmé pour distinguer dans le signal de sortie du capteur compas un changement de direction du nageur afin de compter le nombre d'allers-retours de ce dernier. Ce compteur est également capable de compter les mouvements de nage du nageur utilisant le compteur.

Un tel compteur est de précision limitée.

Il est également connu le document US2006/098772A permettant de mesurer le nombre de tours et/ou la distance parcourue par une personne au cours d'un exercice, le document US 2007/293374 A1 permettant de compter les longueur faites par un nageur en piscine, le document JP2002/196055A permettant de mesurer avec précision un azimut au moyen d'un capteur géomagnétique intégré dans un téléphone cellulaire, et le document US6543146B2 permettant de compenser numériquement les erreurs magnétiques dans les valeurs de champ magnétique mesurées dans un compas électronique, quelle que soit son orientation.

La présente invention a pour but de proposer un système de comptage de changements de direction d'une personne, et notamment de comptage d'allers-retours d'un nageur dans une piscine, ayant une fiabilité de détection améliorée.

Selon un mode de réalisation de l'invention, il est proposé un système de comptage de changements de direction d'une personne, comprenant un boîtier et des moyens de fixations pour lier solidairement ledit boîtier à une partie du corps de ladite personne, le système comprenant :
- des moyens de mesure de la direction du champ magnétique terrestre dans le repère du boîtier comprenant un magnétomètre triaxial calibré apte à fournir des mesures du champ magnétique terrestre à un endroit donné ;
- des moyens de détermination d'une grandeur représentative de l'inclinaison du champ magnétique mesuré par rapport à la verticale, comprenant un accéléromètre calibré à trois axes de mesure muni de moyens de fixation adaptés pour garder ledit accéléromètre triaxial dans une orientation relative par rapport audit magnétomètre sensiblement constante, et sont adaptés pour déterminer ladite grandeur représentative de ladite inclinaison à partir des mesures dudit accéléromètre (3A) ; et
- des premiers moyens de détection d'un changement d'orientation d'une projection orthogonale de ladite direction du champ magnétique terrestre dans un repère plan horizontal d'axes de directions constantes lié en translation à ladite personne, à partir de ladite direction mesurée du champ magnétique et de ladite grandeur représentative de l'inclinaison du champ magnétique par rapport à la verticale, comprenant des premiers moyens d'élaboration d'un signal représentatif dudit changement d'orientation par rapport à une orientation de référence correspondant à un instant de référence, lesdits premiers moyens d'élaboration comprenant des premiers moyens d'estimation du produit vectoriel du vecteur des signaux de mesure transmis par l'accéléromètre et du vecteur des signaux de mesure transmis par le magnétomètre, et adaptés pour détecter un changement de signe dudit produit vectoriel, et des moyens de comparaison de la valeur du produit vectoriel actuelle avec la valeur du produit vectoriel à l'instant de référence.

Il est ainsi possible, avec une fiabilité de détection améliorée, de compter les changements de direction d'une personne. En effet, un système selon l'invention permet de limiter fortement des oublis de détection de changement de direction ou de fausses détections de changement de direction.

Un tel système permet de détecter un changement d'orientation d'une projection orthogonale de la direction du champ magnétique terrestre dans un repère plan horizontal d'axes de directions constantes lié en translation à la personne, sans calculer de projection orthogonale, mais uniquement en détectant un changement de son orientation.

On entend par projection orthogonale de la direction du champ magnétique terrestre dans ledit plan horizontal, la composante dans ledit plan horizontal du champ magnétique mesuré. Aussi, la présente invention permet de détecter un changement d'orientation de cette composante, sans calculer la valeur de celle-ci.

Par exemple, lesdits moyens de mesure de la direction du champ magnétique terrestre dans le repère du boîtier comprennent un magnétomètre triaxial calibré apte à fournir des mesures du champ magnétique terrestre à un endroit donné.

La calibration consiste à transformer les mesures électriques des trois axes en un vecteur à trois composantes dont la direction est celle du champ mesuré et de norme proportionnelle à l'intensité du champ mesuré en utilisant l'expression suivante A(M-O) dans laquelle O est un vecteur à trois dimensions (décalage des trois axes), A est une matrice carrée de dimension trois, prenant en compte la sensibilité des trois axes ainsi que leur éventuelle non orthogonalité.

Les premiers moyens d'élaboration permettent d'extraire ainsi des grandeurs physiques mesurées, le signal utile au comptage des changements de direction. De manière simultanée, on exclut ou annule les changements d'orientation qui ne portent pas d'information de cap, tels les mouvements de rotation d'axe horizontal du segment du corps porteur du boîtier.

Par exemple, ledit instant de référence peut être fixe et lesdits premiers moyens de détection adaptés pour détecter un changement d'orientation de ladite projection lorsque ledit signal représentatif change de position relative par rapport à un seuil.

En variante, ledit instant de référence peut être relatif, à partir de l'instant présent décalé dans le passé d'une durée constante, et lesdits premiers moyens de détection sont adaptés pour détecter un changement d'orientation de ladite projection lorsque ledit signal représentatif présente un pic supérieur ou inférieur à un seuil.

Par exemple, lesdits premiers moyens d'élaboration comprennent des premiers moyens de calcul de la somme des carrés des composantes de la somme dudit produit vectoriel et d'un produit vectoriel de référence estimé par lesdits premiers moyens d'estimation à un instant de référence, et lesdits premiers moyens de détection sont adaptés pour détecter un changement d'orientation de ladite projection à partir de ladite somme calculée par lesdits premiers moyens de calcul et dudit premier seuil, lesdits produits vectoriels étant normalisés.

Les premiers moyens d'estimation permettent de renforcer le signal des mouvements dans le plan horizontal. Les premiers moyens de calcul permettent d'amplifier les changements de direction.

Ledit premier seuil peut alors valoir 4-α₁, α₁ dépendant de la précision de détection souhaitée, α₁ pouvant valoir, par exemple, 0.5 pour détecter de quelconques changements de direction, ou 2 pour détecter des demi-tours ou changements de direction de 180°.

En variante, lesdits premiers moyens d'élaboration comprennent des deuxièmes moyens de calcul d'une portion angulaire séparant ledit produit vectoriel et un produit vectoriel de référence estimé par lesdits premiers moyens d'estimation à un instant de référence, et lesdits premiers moyens de détection sont adaptés pour détecter un changement d'orientation de ladite projection à partir de ladite portion angulaire calculée par lesdits deuxièmes moyens de calcul et d'un deuxième seuil.

Les deuxièmes moyens de calcul permettent d'obtenir une portion angulaire représentative du changement de direction. Ainsi, le seuil est facile à régler en fonction des changements de direction que l'on souhaite détecter.

Ledit deuxième seuil peut alors valoir, par exemple, 30° si l'on souhaite détecter des changements de direction supérieurs à 30°, ou 90° si l'on souhaite détecter des demi-tours.

Il est alors aisé de régler la sensibilité du système.

Dans un mode de réalisation, lesdits premiers moyens d'élaboration comprennent des troisièmes moyens d'estimation de l'angle de lacet dudit magnétomètre par rapport audit plan horizontal, à partir des mesures de l'accéléromètre et du magnétomètre.

On calcule ainsi directement l'angle de la rotation recherchée.

Selon un mode de réalisation, le système peut être adapté pour compter le nombre de changements de direction d'un nageur dans une piscine, dans lequel ledit boîtier est étanche, et dans lequel ledit changement d'orientation correspond à un changement de sens de traversée de la piscine.

Un tel système est particulièrement pratique pour un nageur qui veut surveiller son entrainement et ses progrès.

Selon un mode de réalisation, le système comprend un accéléromètre à trois axes de mesure muni de moyens de fixation adaptés pour garder ledit accéléromètre triaxial dans une orientation relative par rapport audit magnétomètre, et des deuxièmes moyens de détection d'un changement de signe du vecteur d'accélération mesuré par ledit accéléromètre représentatif d'un changement entre une nage ventrale et une nage dorsale du nageur.

Ainsi, dans le cas du nageur on peut détecter un passage d'une nage sur le dos à une nage sur le ventre, et vice versa.

Dans un mode de réalisation, lesdits deuxièmes moyens de détection comprennent des douzièmes moyens de calcul de la somme des carrés des composantes de la somme d'un vecteur d'accélération mesuré par ledit accéléromètre et d'un vecteur d'accélération de référence mesuré par ledit accéléromètre à un instant de référence, et lesdits deuxièmes moyens de détection sont adaptés pour détecter un changement entre une nage ventrale et une nage dorsale du nageur à partir de ladite somme calculée par lesdits douzièmes moyens de calcul et d'un cinquième seuil, lesdits vecteurs étant normalisés.

En cas de changement de type de nage ventral/dorsal, on limite le risque de non détection d'un demi-tour correspondant également à un retournement en bout de longueur de la piscine.

Ledit cinquième seuil peut alors valoir 2 ou 3.

Lorsque le cinquième seuil est choisi égal à 3, la sensibilité de détection du système est plus élevée que lorsque le seuil est choisi égal à 2.

En variante, lesdits deuxièmes moyens de détection comprennent des treizièmes moyens de calcul d'une portion angulaire séparant ledit vecteur d'accélération mesuré par ledit accéléromètre et un vecteur d'accélération de référence mesuré par ledit accéléromètre à un instant de référence, et lesdits deuxièmes moyens de détection sont adaptés pour détecter un changement entre une nage ventrale et une nage dorsale du nageur à partir de ladite portion angulaire calculée par lesdits treizièmes moyens de calcul et d'un sixième seuil.

Il est ainsi possible de disposer d'une indication angulaire concernant le retournement du nageur.

Ledit sixième seuil peut alors valoir 60° ou 90°.

Lorsque le seuil est choisi égal à 60°, la sensibilité de détection du système est plus élevée que lorsque le seuil est choisi égal à 90°.

On ne détecte ainsi que des changements d'orientation de l'accéléromètre pour isoler les changements de position ventrale/dorsale du nageur.

En variante, lesdits deuxièmes moyens de détection comprennent des quatorzièmes moyens de calcul d'un produit scalaire dudit vecteur d'accélération mesuré par ledit accéléromètre et d'un vecteur d'accélération de référence mesuré par ledit accéléromètre à un instant de référence, et lesdits deuxièmes moyens de détection sont adaptés pour détecter un changement entre une nage ventrale et une nage dorsale du nageur à partir dudit produit scalaire calculé par lesdits quatorzièmes moyens de calcul et d'un septième seuil, lesdits vecteurs étant normalisés.

Ainsi, les changements d'orientation de l'accéléromètre de faibles valeurs sont écartés.

Ledit septième seuil peut alors valoir 0 ou 0.5.

Lorsque le septième seuil est choisi égal à 0.5, la sensibilité de détection du système est plus élevée que lorsque le seuil est choisi égal à 0.

Dans un mode de réalisation, lesdits deuxièmes moyens de détection sont adaptés pour mettre à jour un instant de référence fixe au moment de détection d'un changement entre une nage ventrale et une nage dorsale du nageur.

Le signal est ainsi plus stable dans le temps et les changements de direction ou les retournements ventral/dorsal sont plus faciles à détecter.

Dans un mode de réalisation, le système comprend, en outre, des moyens de filtrage passe-bas ou par moyenne sur une fenêtre glissante.

Après un tel filtrage, le signal peut être sous-échantillonné, ce qui limite le coût en termes de calcul.

Selon un autre aspect de l'invention, il est également proposé un procédé de comptage de changements de direction d'une personne, caractérisé en ce qu'il comprend les étapes consistant à :
- mesurer la direction du champ magnétique terrestre dans le repère d'un boîtier (BT) lié solidairement à une partie du corps de ladite personne, ledit boîtier comprenant un magnétomètre triaxial calibré (3M) apte à fournir des mesures du champ magnétique terrestre à un endroit donné ;
- déterminer une grandeur représentative de l'inclinaison du champ magnétique mesuré par rapport à la verticale à partir d'un accéléromètre (3A) calibré à trois axes de mesure fixé (FIX) dans une orientation relative par rapport audit magnétomètre (3M) sensiblement constante, et déterminer ladite grandeur représentative de ladite inclinaison à partir des mesures dudit accéléromètre (3A) ; et
- détecter un changement d'orientation d'une projection orthogonale de ladite direction du champ magnétique terrestre dans un repère plan horizontal d'axes de directions constantes lié en translation à ladite personne, à partir de ladite direction mesurée du champ magnétique et de ladite grandeur représentative de l'inclinaison du champ magnétique par rapport à la verticale, en élaborant (ELAB1) un signal représentatif dudit changement d'orientation par rapport à une orientation de référence correspondant à un instant de référence (t_{ref}), ladite élaboration (ELAB1) comprenant une estimation (EST1) du produit vectoriel (V) du vecteur (A) des signaux de mesure transmis par l'accéléromètre (3A) et du vecteur (B) des signaux de mesure transmis par le magnétomètre (3M), et la détection d'un changement de signe dudit produit vectoriel (V), et en comparant la valeur du produit vectoriel actuelle (V(t)) avec la valeur du produit vectoriel à l'instant de référence (V(t_{ref})).

L'invention sera mieux comprise à l'étude de quelques modes de réalisation décrits à titre d'exemples nullement limitatifs et illustrés par les dessins annexés sur lesquels :
- les figures 1 à 3, et 9 à 12 illustrent schématiquement des modes de réalisation d'un système, selon divers aspects de l'invention, comprenant un accéléromètre triaxial ;
- les figures 13a, 13b, 13c, 13d, 13e, 13f et 13g illustrent un premier exemple de fonctionnement d'un système selon la figure 1 adapté à la natation, sans changements entre une nage ventrale et une nage dorsale du nageur ; et
- les figures 14a, 14b, 14c, 14d, 14e, et 14f illustrent un deuxième exemple de fonctionnement du système de la figure 11, adapté à la natation, avec des changements entre une nage ventrale et une nage dorsale du nageur.

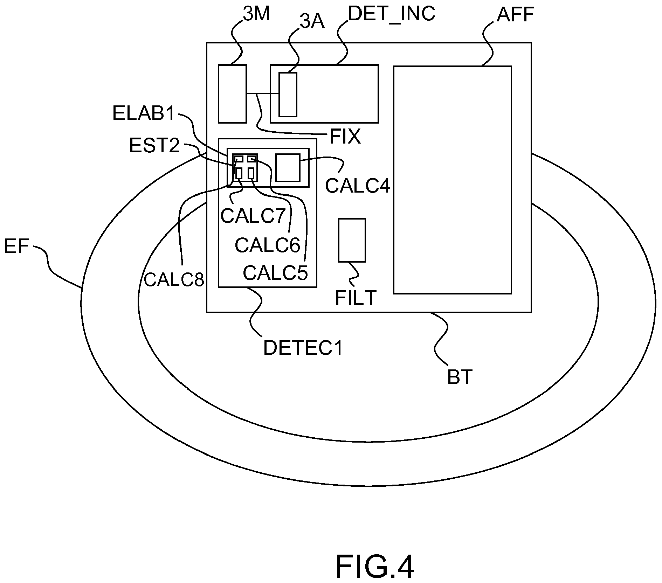

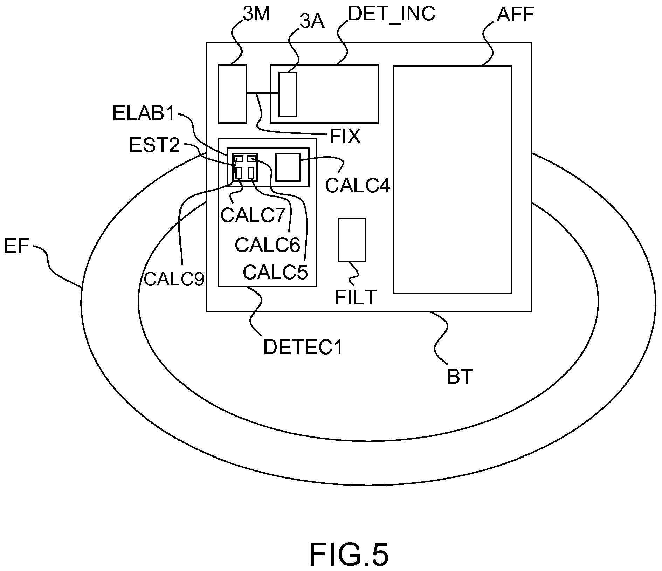

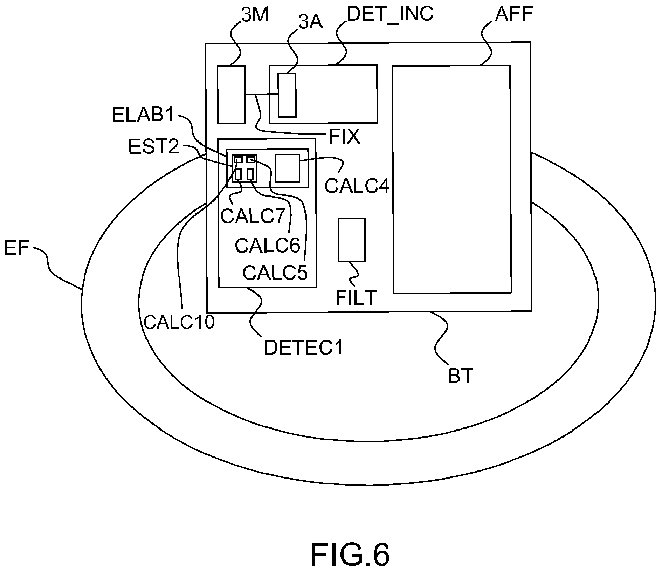

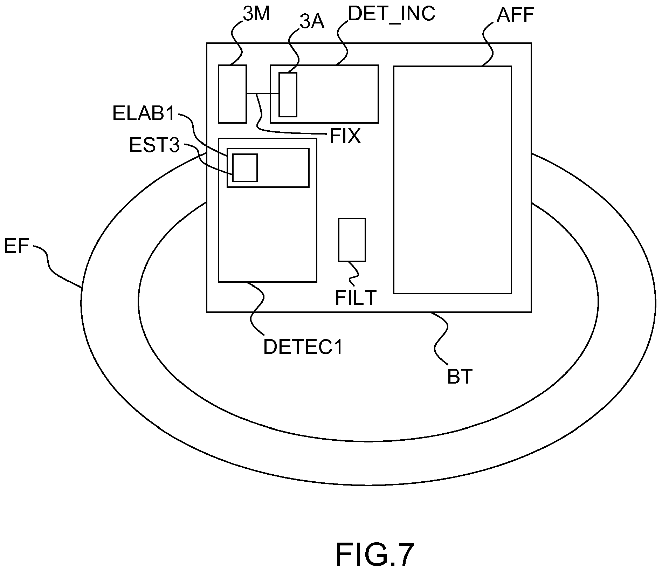

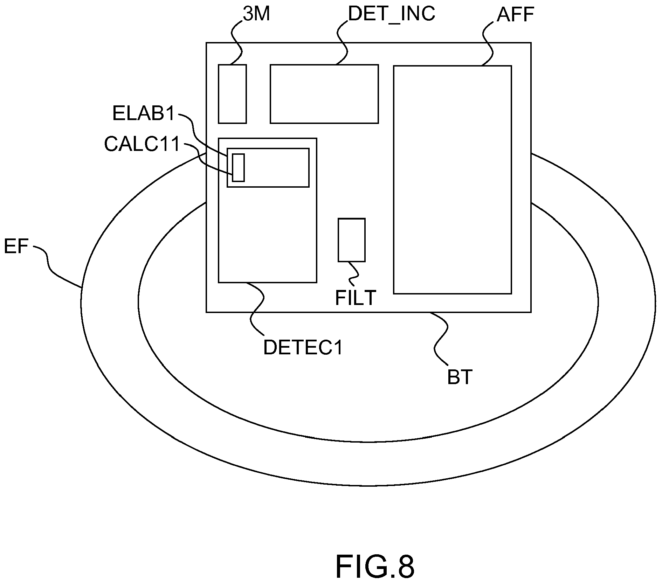

Les figures 4-8 ne concernent pas l'invention revendiquée.

Dans l'ensemble de figures, les éléments ayants les mêmes références sont similaires.

Dans la suite de la description, pour faciliter encore la compréhension de l'invention, cette dernière est décrite en relation avec la natation, avec un système de comptage du nombre d'allers/retours d'un nageur dans une piscine. Mais elle a d'autres applications, telles que la course à pied d'une personne sur une piste, le tour de vélo sur une piste, etc.

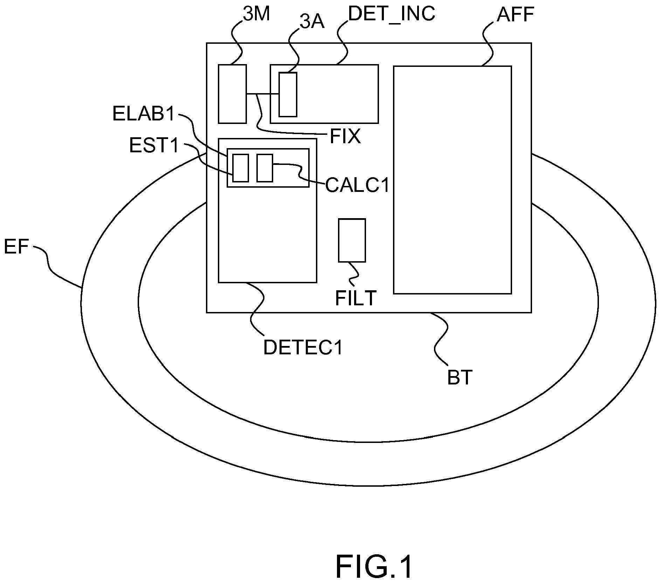

Tel qu'illustré sur la figure 1, le système de comptage de changements de direction d'une personne comprend un boîtier BT muni d'un magnétomètre 3M calibré à trois axes de mesure. Le boîtier BT est adapté pour être fixé sur une partie du corps de ladite personne, en l'occurrence au moyen d'un élastique de fixation EF. En variante, tout autre moyen de fixation peut convenir.

Des moyens d'affichage AFF, par exemple liés au boîtier peuvent permettre d'afficher les résultats. Les moyens d'affichage AFF peuvent également être en liaison ou remplacés par des moyens d'indication audio pour un casque audio.

Le système comprend un module de détermination DET_INC d'une grandeur représentative de l'inclinaison du champ magnétique mesuré par rapport à la verticale, et un premier module de détection DETEC1 d'un changement d'orientation d'une projection orthogonale d'au moins un axe de mesure dudit magnétomètre dans un repère plan horizontal d'axes de directions constantes lié en translation à ladite personne. En d'autres termes, on s'intéresse uniquement à la composante horizontale du champ magnétique mesuré dans le repère du capteur. Cette composante est donnée en décomposant le champ mesuré dans le repère du capteur en deux parties : la composante horizontale et la composante verticale

On considère cependant que le changement de la composante verticale n'est pas lié au changement de direction de la personne dans le plan horizontal, mais plutôt à des mouvements de tête propre à la nage par exemple (sauf dans le cas d'un changement de direction lié à un passage de la nage sur le dos à la nage sur le ventre et inversement : ce cas particulier est traité plus tard). De ce fait (hormis dans le cas particulier du changement de nage ventre/dos ou dos/ventre), seule la composante horizontale est exploitée pour détecter le changement de direction de la personne et on élimine ainsi les signaux représentatifs des mouvements parasites pour se concentrer sur les signaux "utiles".

Le premier module de détection DETEC1 permet de détecter un changement d'orientation de la composante horizontale du champ magnétique mesuré, sans nécessiter de déterminer la valeur de cette composante.

Le magnétomètre 3M et un accéléromètre optionnel 3A sont préalablement calibrés pour avoir des mesures du magnétomètre 3M et de l'accéléromètre 3A proportionnelles aux champs physiques. Aussi, dans la présente description, l'accélération propre de l'accéléromètre 3A et les perturbations magnétiques sont considérées comme nulles. Les axes de mesures du magnétomètre 3M et de l'accéléromètre 3A optionnel sont généralement colinéaires deux à deux, et pour chacun de ces capteurs les trois axes de mesures sont deux à deux orthogonaux. Si ce n'est pas le cas, une étape supplémentaire de calibration géométrique permet d'effectuer la transformation nécessaire pour obtenir ces conditions de manière à aligner le repère de l'accéléromètre avec le repère du magnétomètre.

Le premier module de détection DETEC1 comprend un premier module d'élaboration ELAB1 d'un signal représentatif dudit changement d'orientation par rapport à une orientation de référence correspondant à un instant de référence t_{ref}.

L'instant de référence t_{ref} peut être fixe (par exemple, l'instant initial t0 pris au début de l'activité de la nage), et les premiers moyens de détection DETEC1 adaptés pour détecter un changement d'orientation de la projection lorsque le signal représentatif change de position relative par rapport à un seuil.

Par exemple, on considère que pour t_{ref}=t0, on a un signal carré représentatif des mesures qui passent de part et d'autre du seuil. On peut, par exemple, dire que si ce signal est supérieur à ce seuil pendant un temps suffisamment long, on a l'aller sur un parcours (ou retour) et si le signal est inférieur à ce seuil pendant un temps suffisamment long, on a le retour (ou l'aller).

De ce fait, on élimine les points aberrants, c'est-à-dire, les points qui ne sont pas significatifs sur une longueur et on compte ensuite les longueurs.

En variante, l'instant de référence t_{ref} peut être relatif, à partir de l'instant présent t décalé dans le passé d'une durée constante T (décalage temporel).

Par exemple, T peut être inférieur à une durée minimale d'une longueur de piscine et supérieure à la durée de retournement du nageur (par exemple, pour une piscine de 25m, 1s<T<10s).

Les premiers moyens de détection DETEC1 adaptés pour détecter un changement d'orientation de la projection lorsque le signal représentatif présente un pic par rapport à un seuil. En effet, dans le cas où l'instant de référence t_{ref} est relatif, le signal de mesure est un signal présentant des pics correspondants aux retournements. Ces pics sont détectés s'ils sont supérieurs (ou inférieurs) au seuil, i.e. s'ils changent de position relative par rapport au seuil, de cette façon, on élimine les composantes inférieures à ce seuil et pouvant correspondre à du bruit ou des mesures erronées.

La détermination d'un seuil peut être effectuée comme suit. On cherche d'abord quelle est la valeur de la grandeur représentative lorsque t et t_{ref} sont dans la même direction et quelle est cette valeur quand ils sont dans des directions opposées. Le seuil utilisé est choisi entre ces deux valeurs.

Le seuil relatif à l'instant de référence peut être n'importe quel seuil (du premier seuil au huitième seuil) présenté ultérieurement.

Le module de détermination DET_INC peut comprendre un accéléromètre calibré optionnel 3A à trois axes de mesure muni d'un élément de fixation FIX adapté pour garder ledit accéléromètre triaxial 3A dans une orientation relative par rapport au magnétomètre 3M sensiblement constante. Le module de détermination DET_INC peut déterminer ladite inclinaison à partir des mesures de l'accéléromètre 3A.

Le premier module d'élaboration ELAB1 comprend un premier module d'estimation EST1 du produit vectoriel V du vecteur des signaux de mesure A(t) transmis par l'accéléromètre 3A et du vecteur B(t) des signaux de mesure transmis par le magnétomètre 3M, et peut détecter un changement de signe du produit vectoriel V. A tout instant, le premier module d'estimation EST1 fait le produit vectoriel V(t) de la mesure de l'accéléromètre 3A avec celle du magnétomètre 3M : V(t)=A(t)^B(t). Le signal V à 3 dimensions représente les coordonnées de l'EST horizontal dans le repère du magnétomètre 3M. Ainsi, à chaque retournement dans le plan horizontal on doit observer le passage de V à -V. Les vecteurs V peuvent, en variante, être normalisés en divisant V par sa norme V/∥V∥.

Pour observer le passage de V à -V, le premier module d'élaboration ELAB1 comprend en outre un premier module de calcul CALC1 de la somme des carrés des composantes de la somme du produit vectoriel V(t) et d'un produit vectoriel de référence V(t_{ref}) estimé par le module d'estimation à l'instant de référence t_{ref} : (Vₓ(t)+Vₓ(t_{ref}))²+ (V_{y}(t)+V_{y}(t_{ref}))²+(V_{z}(t)+V_{z}(t_{ref}))²
Vₓ, V_{y} et V_{z} représentant les composantes suivant les trois axes du repère du magnétomètre 3M. Les produits vectoriels sont normalisés.

Le premier module de détection DETEC1 permet de détecter un changement d'orientation de la projection, correspondant à un changement de cap de la personne, à partir de ladite somme calculée par lesdits premiers moyens de calcul CALC1 et d'un premier seuil, comme expliqué précédemment, selon que l'instant de référence t_{ref} est fixe ou relatif, respectivement lorsque le signal représentatif change de position relative par rapport à un premier seuil ou lorsque ledit signal représentatif présente un pic supérieur ou inférieur à un premier seuil.

Ce premier seuil peut valoir 4-α₁, α₁ pouvant valoir, par exemple, 0.5 pour détecter de quelconques changements de direction, ou 2 pour détecter des demi-tours ou changements de direction de 180°. En effet, pour un système adapté à compter des demi-tours et plus particulièrement ceux d'un nageur, le premier seuil peut être fixé à 2 puisque la somme calculée par le premier module de calcul CALC1 doit être proche de 0 quand on a changé de longueur et de 4 quand on est sur la même longueur.

Un module filtrage FILT facultatif, de type passe-bas ou par moyenne sur une fenêtre glissante permet de pouvoir sous-échantillonner le signal à traiter, et de limiter ainsi le nombre de calculs à effectuer, ainsi que d'éliminer des mouvements parasites dans le plan horizontal ainsi que de minimiser l'effet des perturbations magnétiques et des accélérations propres. Ce module de filtrage FILT permet également d'éliminer des mouvements de rotation qui ne correspondent pas à des changements de direction comme des rotations de l'endroit où est fixé le capteur lors d'une foulée pour le coureur ou le marcheur, d'un mouvement de nage pour le nageur, d'un tour de pédale pour le cycliste, d'un tour de rame pour le rameur... Ces mouvements étant de plus haute fréquence que le signal à observer (les changements de directions), le filtrage passe bas ou par moyenne sur fenêtre glissante est particulièrement bien adapté.

Dans le cas d'un système adapté à un nageur, ce filtrage permet de minimiser les variations dues aux mouvements périodiques, par exemple de la tête du nageur lorsque le système est fixé sur la tête du nageur, par exemple sur ses lunettes de natation. Ce filtrage minimise en outre l'effet des accélérations propres et des perturbations magnétiques.

Lorsque le module de filtrage FILT met en oeuvre un filtrage passe-bas, analogique ou numérique, la fréquence de coupure est inférieure à la fréquence des mouvements de tête et supérieure à la fréquence de changement de longueur. Lorsque le module de filtrage FILT met en oeuvre un filtrage par moyenne glissante, la largeur de la fenêtre glissante est supérieure à la durée d'un mouvement de tête et inférieure à la durée d'une longueur de piscine. Les calculs sont simplifiés si le filtrage est effectué après la numérisation du signal.

Pour une piscine de longueur 25m, la fréquence de coupure du filtre peut être de 0.12Hz dans le cas du filtrage passe-bas, et la largeur de la fenêtre glissante peut être de 8s dans le cas du filtrage par moyenne glissante. En cas de filtrage passe-bas, la fréquence de coupure du filtre FILT doit toujours être supérieure à celle des allers-retours. Dans la mesure du possible, elle doit être inférieure à celle des mouvements autres que ceux des retournements. En général cela est possible puisque les allers-retours ont lieu sur une grande échelle de temps et que les autres mouvements, périodiques ou non, sont plus rapides.

Dans le cas du coureur avec un capteur au pied par exemple, le module de filtrage FILT permet de filtrer les foulées.

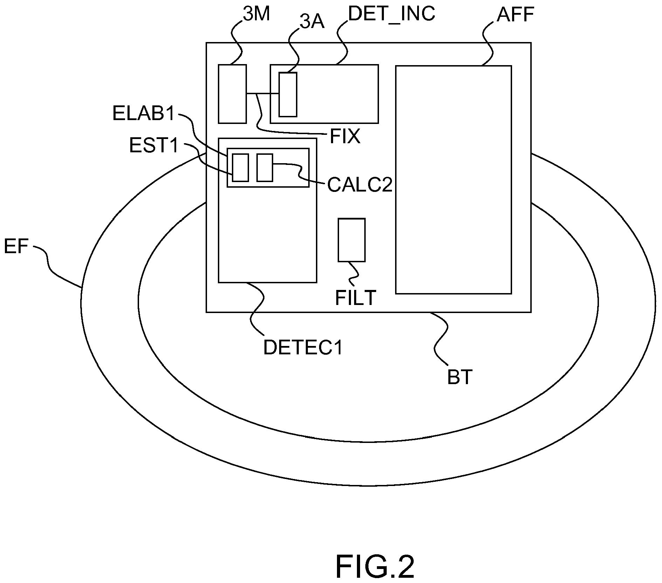

La figure 2 représente schématiquement une variante du système de la figure 1, sur laquelle à la place du premier module de calcul CALC1, un deuxième module de calcul CALC2 d'une portion angulaire séparant le produit vectoriel V(t) et un produit vectoriel de référence V(t_{ref}) estimé par le premier module d'estimation EST1 à un instant de référence t_{ref}. Le premier module de détection DETEC1 est adapté pour détecter un changement d'orientation de ladite projection à partir de la portion angulaire calculée par le deuxième module de calcul CALC2 et d'un deuxième seuil.

Le deuxième seuil peut alors, par exemple, valoir 30° si l'on souhaite détecter des changements de direction supérieurs à 30°, et 90° si l'on souhaite compter des demi-tours, notamment dans le cas d'un système adapté à un nageur, auquel cas l'angle doit être de 180° quand on a changé de longueur et de 0° quand on est sur la même longueur.

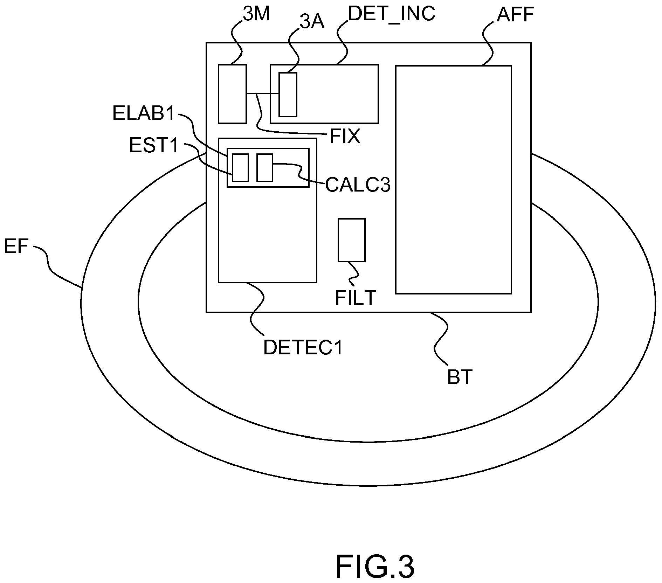

La figure 3 représente schématiquement une variante du système de la figure 1 ou du système de la figure 2, sur laquelle à la place du premier module de calcul CALC1 ou du deuxième module de calcul CALC2, le système comprend un troisième module de calcul CALC3 du produit scalaire du produit vectoriel V(t) et d'un produit vectoriel de référence V(t_{ref}) estimé par le premier module d'estimation EST1 à un instant de référence t_{ref}.

Le premier module de détection DETEC1 est adapté pour détecter un changement d'orientation de la projection à partir du produit scalaire calculé par le troisième module de calcul CALC3 et d'un troisième seuil, lesdits produits vectoriels étant normalisés.

Le troisième seuil peut alors valoir 1-α₃, lorsque lesdits produits vectoriels V sont normalisés, α₃ pouvant valoir, par exemple 0.1. Pour un système adapté à un nageur, α₃ peut être fixé à 1, car le produit scalaire est soit égal à 1 lorsque le nageur est sur la même longueur, soit à -1 lorsque le nageur a changé de longueur par rapport à celle de l'instant de référence t_{ref}. Le troisième seuil peut alors être fixé à 0.

En variante, ces diverses réalisations pourraient être réalisées en parallèle, permettant de limiter sensiblement les erreurs de détection.

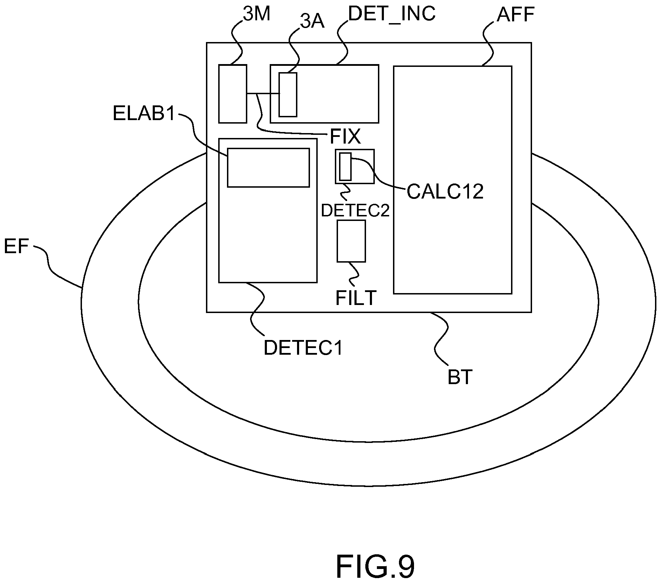

La figure 9 représente schématiquement une variante du système adapté à la natation, comprenant un deuxième module de détection DETEC2, similaire au premier module de détection DETEC1, pour détecter un changement de signe du vecteur d'accélération mesuré par l'accéléromètre 3A, représentatif d'un changement entre une nage ventrale et une nage dorsale du nageur. Cette détection de changement de signe, peut également être réalisée de plusieurs manières différentes.

En l'espèce, un douzième module de calcul CALC12 permet de calculer la somme des carrés des composantes de la somme d'un vecteur d'accélération A(t) mesuré par ledit accéléromètre 3A et d'un vecteur d'accélération de référence A(t_{ref}) mesuré par ledit accéléromètre 3A à un instant de référence t_{ref}. Les deuxièmes moyens de détection DETEC2 sont adaptés pour détecter un changement entre une nage ventrale et une nage dorsale du nageur à partir de la somme calculée par lesdits douzièmes moyens de calcul CALC12 et d'un sixième seuil, lesdits vecteurs étant normalisés.

Le sixième seuil peut alors valoir 3 ou 2.

Lorsque le sixième seuil est choisi égal à 3, la sensibilité de détection du système est plus élevée que lorsque le seuil est choisi égal à 2.

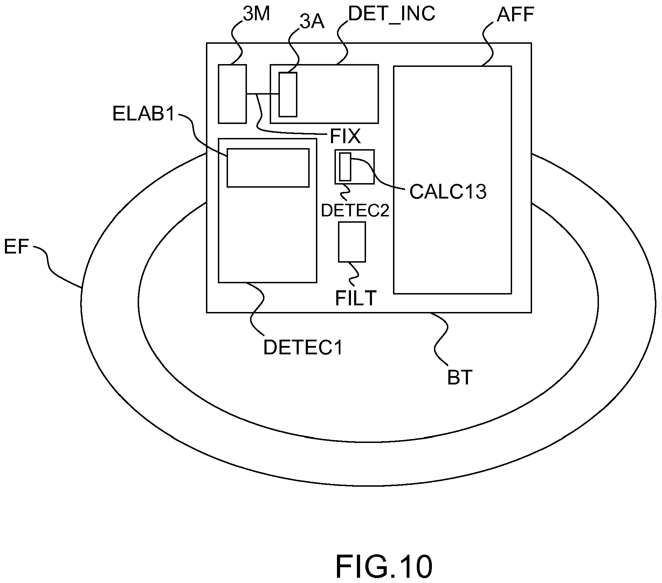

La figure 10 représente schématiquement une variante du système de la figure 9, dans laquelle le deuxième module de détection DETEC2 comprend un treizième module de calcul CALC13 d'une portion angulaire séparant le vecteur d'accélération A(t) mesuré par l'accéléromètre 3A et un vecteur d'accélération de référence A(tref) mesuré par l'accéléromètre 3A à un instant de référence t_{ref}. Le deuxième module de détection DETEC2 est adapté pour détecter un changement entre une nage ventrale et une nage dorsale du nageur à partir de la portion angulaire calculée par le treizième module de calcul CALC13 et d'un septième seuil.

Le septième seuil peut alors valoir 60° ou 90°.

Lorsque le septième seuil est choisi égal à 60°, la sensibilité de détection du système est plus élevée que lorsque le seuil est choisi égal à 90°.

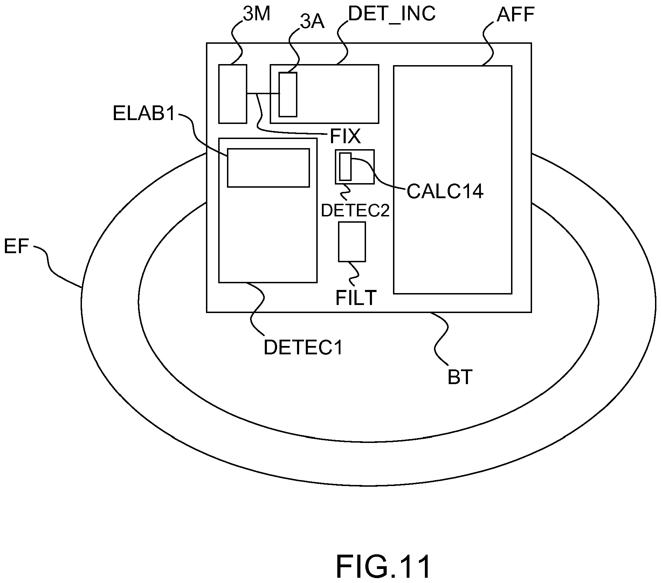

La figure 11 représente schématiquement une variante du système de la figure 9 ou de la figure 10, dans laquelle le deuxième module de détection DETEC2 comprend un quatorzième module de calcul CALC14 d'un produit scalaire du vecteur d'accélération A(t) mesuré par l'accéléromètre 3A et d'un vecteur d'accélération de référence A(t_{ref}) mesuré par l'accéléromètre 3A à un instant de référence t_{ref}. Le deuxième module de détection DETEC2 est adapté pour détecter un changement entre une nage ventrale et une nage dorsale du nageur à partir dudit produit scalaire calculé par le quatorzième module de calcul CALC14 et d'un huitième seuil, lesdits vecteurs étant normalisés.

Le huitième seuil peut alors valoir 0.5 ou 0.

Lorsque le huitième seuil est choisi égal à 0.5, la sensibilité de détection du système est plus élevée que lorsque le seuil est choisi égal à 0.

Le deuxième module de détection DETEC2 est adapté pour mettre à jour un instant de référence fixe t_{ref} dès la détection d'un changement entre une nage ventrale et une nage dorsale du nageur.

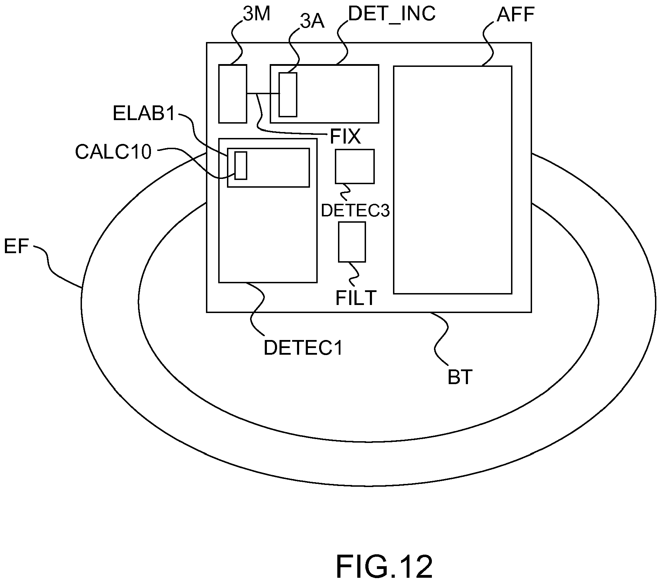

La figure 12 illustre un système comprenant un troisième module de détection DETEC3 d'un changement entre une nage ventrale et une nage dorsale du nageur lorsque le produit scalaire calculé par le onzième module de calcul CALC11 passe d'une valeur positive à une valeur négative. L'instant de référence t_{ref} est relatif.

Les premier et deuxième exemples qui suivent illustrent respectivement un fonctionnement d'un système selon la figure 1 adapté à la natation, sans changements entre une nage ventrale et une nage dorsale du nageur, et un fonctionnement du système de la figure 11, adapté à la natation, avec des changements entre une nage ventrale et une nage dorsale du nageur.

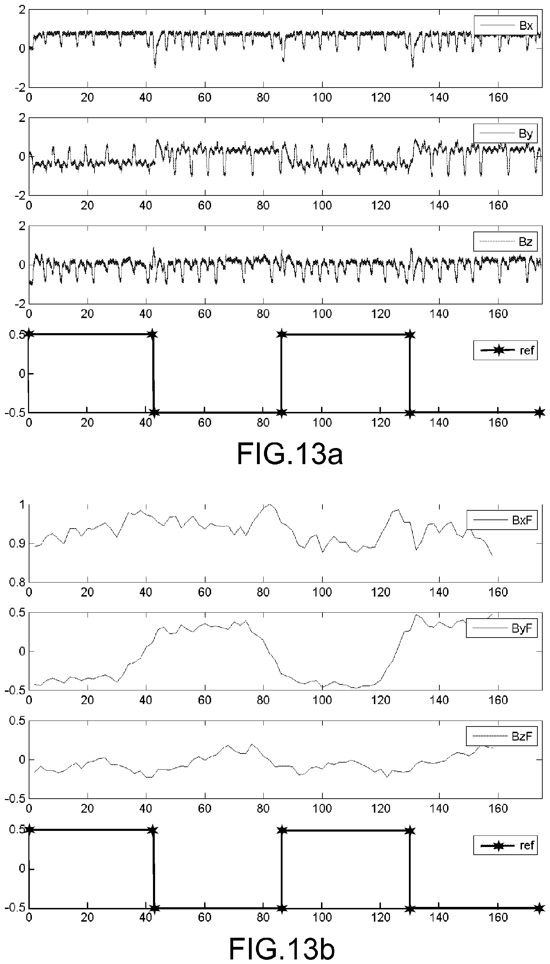

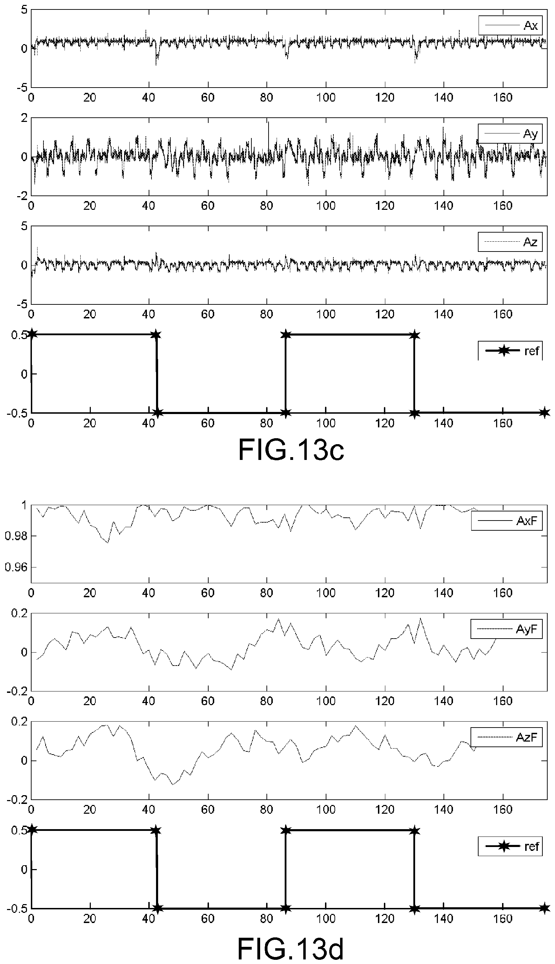

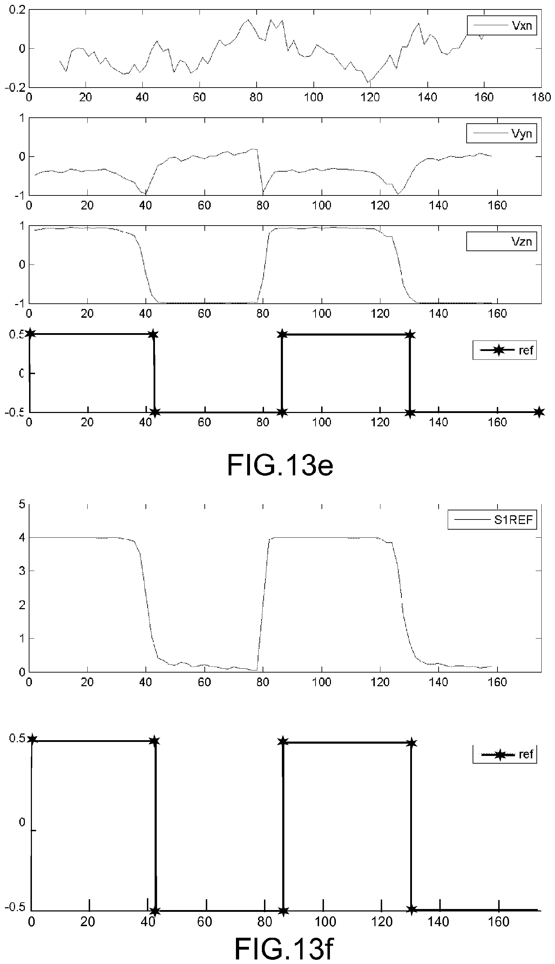

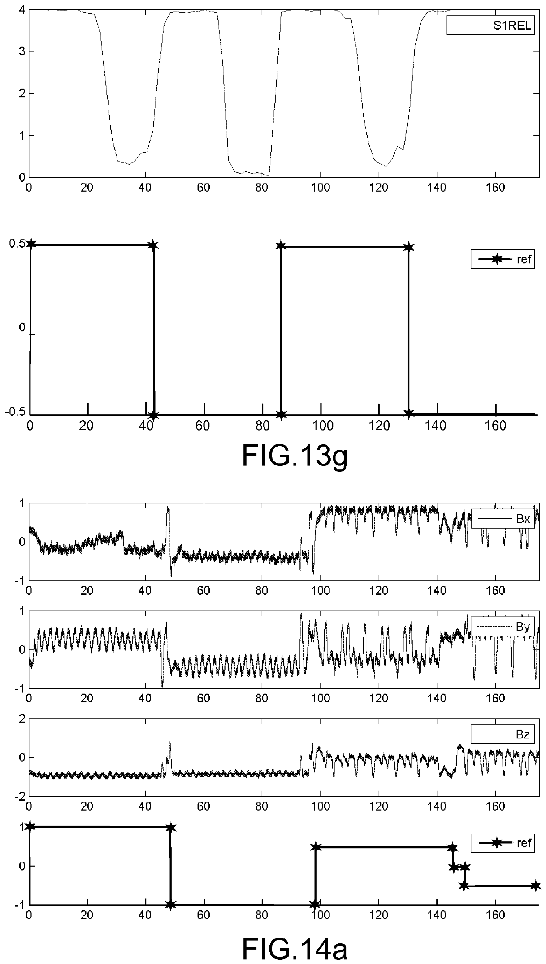

Le premier exemple est illustré par les figures 13a, 13b, 13c, 13d, 13e, 13f et 13g.

La figure 13a représente les signaux de mesure selon les trois axes du magnétomètre 3M correspondant à une séance de natation d'un nageur comportant deux allers-retours d'une piscine de cinquante mètres de longueur. Le signal de référence REF représente les allers (valeur à 0.5) et les retours (valeur à -0.5).

La figure 13b représente les signaux de mesure du magnétomètre 3M de la figure 13a après filtrage par moyenne sur fenêtre glissante de 16 s, et sous-échantillonnage.

La figure 13c représente, pour cette séance de natation, les mesures de l'accéléromètre 3A., et la figure 13d représente les mesures de l'accéléromètre 3A après filtrage par moyenne sur fenêtre glissante de 16 s, et sous-échantillonnage.

La figure 13e représente les composantes du produit vectoriel du champ magnétique filtré de la figure 13b et du champ de gravité filtré de la figure 13d effectué par les premiers moyens d'estimation EST1 et normalisé.

La figure 13f représente le signal S1REF représentatif du changement de direction, en l'occurrence d'un demi-tour du nageur, calculé par le premier moyen de calcul CALC1, avec l'instant de référence t_{ref} fixe et est pris à t_{ref}=10s. En ce cas, le premier module de détection DETEC1 détecte des passages du signal S1REF de part et d'autre du seuil valant 2. Aux alentours de t=40s, un passage au dessous du seuil est détecté, puis un passage au dessus du seuil aux alentours de t=80s, puis à nouveau un passage au dessous du seuil aux alentours de t=130s. Le système a donc détecté 3 demi-tours, ce qui correspond à 4 longueurs de piscine, et puisque la piscine a une longueur de 50m, à 200m.

En variante, sur la figure 13g, est représenté le signal délivré par le premier module de calcul CALC1, avec un instant de référence relatif à partir de l'instant présent t décalé dans le passé d'une durée constante, en l'espèce égale à 9s. Trois pics sont détectés lorsque le signal passe en dessous du seuil pris égal à 2.

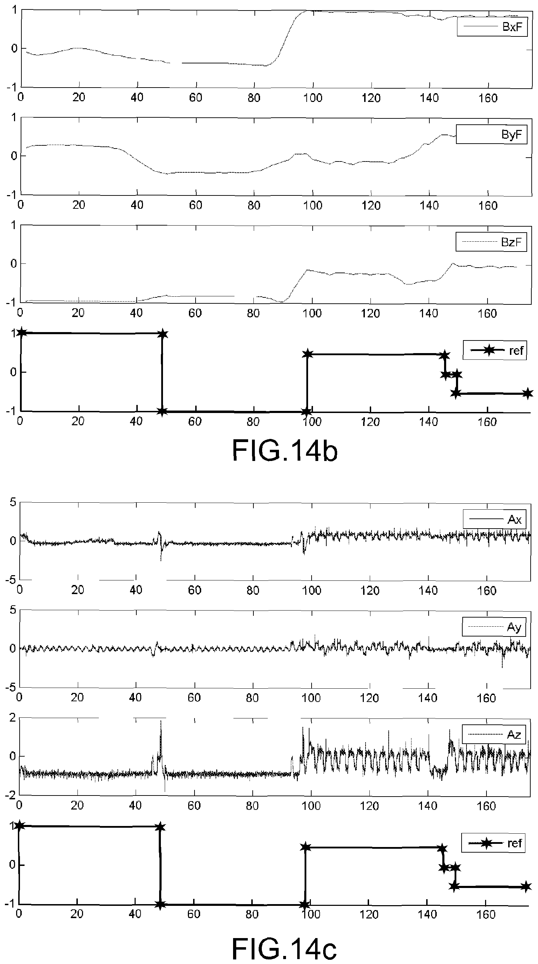

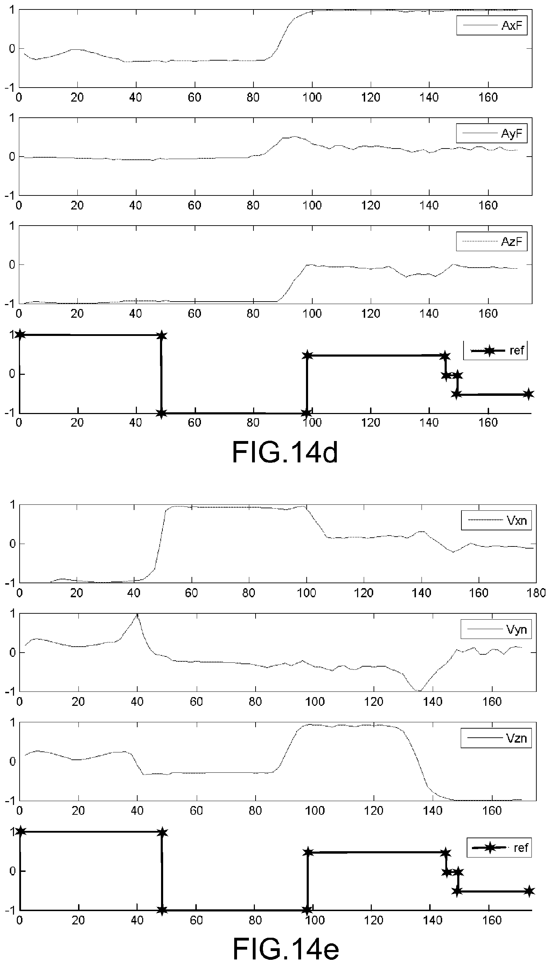

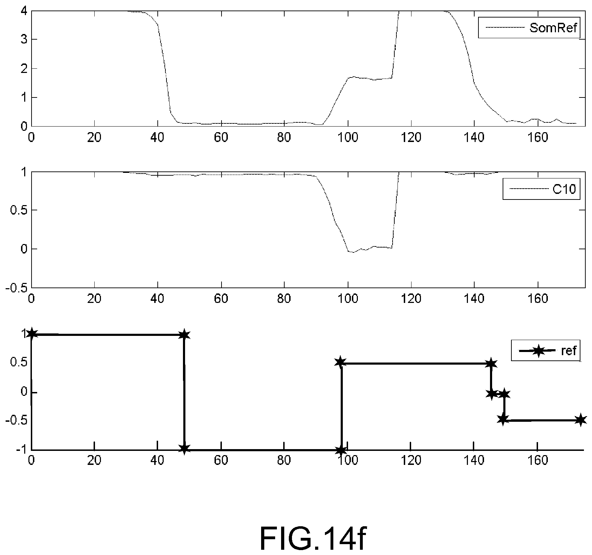

Le deuxième exemple est illustré par les figures 14a, 14b, 14c, 14d, 14e, et 14f.

La figure 14a représente les signaux de mesure selon les trois axes du magnétomètre 3M correspondant à une séance de natation d'un nageur comportant deux allers-retours d'une piscine de cinquante mètres de longueur. Le signal de référence REF représente un aller sur le dos (REF=1), suivi d'un retour sur le dos (REF=-1) puis d'un aller sur le ventre (REF=0.5), puis d'un retour sur le ventre (REF=-0.5).

La figure 14b, représente les signaux de mesure du magnétomètre 3M de la figure 14a après filtrage par moyenne sur fenêtre glissante de 16 s, et sous-échantillonnage.

La figure 14c représente, pour cette séance de natation, les mesures de l'accéléromètre 3A, et la figure 14d représente les mesures de l'accéléromètre 3A après filtrage par moyenne sur fenêtre glissante de 16 s, et sous-échantillonnage.

La figure 14e représente les composantes du produit vectoriel du champ magnétique filtré de la figure 14b et du champ de gravité filtré de la figure 14d effectué par les premiers moyens d'estimation EST1 et normalisé.

La figure 14f représente le signal SOMREF représentatif du changement de direction, en l'occurrence d'un demi-tour du nageur, calculé par le premier moyen de calcul CALC1, avec l'instant de référence t_{ref} fixe et mis à jour lors d'une détection d'un changement entre une nage ventrale et une nage dorsale, ainsi que le signal C10 calculé par le quatorzième module de calcul CALC 14. En ce cas, le premier module de détection DETEC1 détecte un passage du signal SomRef sous le seuil valant 2 (demi-tour) pendant un temps suffisamment long, en l'occurrence 10s. Aux alentours de t=100s, le deuxième module de détection DETEC2 détecte un passage du signal C10 au dessous du seuil valant 0,5 (changement entre une nage ventrale et une nage dorsale) pendant un temps suffisamment long, en l'occurrence 10s. Cette détection compte comme un demi-tour. L'instant de référence t_{ref} est mis à jour aux alentours de t=120s. Un demi-tour est détecté aux alentours de t=140s, lorsque le signal SomRef passe au dessus du seuil pendant un temps suffisamment long, en l'occurrence 10s. Le système a donc détecté 3 demi-tours, ce qui correspond à 4 longueurs de piscine, et puisque la piscine a une longueur de 50m, à 200m.

## Revendications

1. Système de comptage de changements de direction d'une personne, comprenant un boîtier (BT) et des moyens de fixations (EF) pour lier solidairement ledit boîtier (BT) à une partie du corps de ladite personne, **caractérisé en ce qu'**il comprend :
- des moyens de mesure de la direction du champ magnétique terrestre dans le repère du boîtier comprenant un magnétomètre triaxial calibré (3M) apte à fournir des mesures du champ magnétique terrestre à un endroit donné;
- des moyens de détermination (DET_INC) d'une grandeur représentative de l'inclinaison du champ magnétique mesuré par rapport à la verticale, comprenant un accéléromètre (3A) calibré à trois axes de mesure muni de moyens de fixation (FIX) adaptés pour garder ledit accéléromètre triaxial (3A) dans une orientation relative par rapport audit magnétomètre (3M) sensiblement constante, et sont adaptés pour déterminer ladite grandeur représentative de ladite inclinaison à partir des mesures dudit accéléromètre (3A) ; et
- des premiers moyens de détection (DETEC1) d'un changement d'orientation d'une projection orthogonale de ladite direction du champ magnétique terrestre dans un repère plan horizontal d'axes de directions constantes lié en translation à ladite personne, à partir de ladite direction mesurée du champ magnétique et de ladite grandeur représentative de l'inclinaison du champ magnétique par rapport à la verticale, comprenant des premiers moyens d'élaboration (ELAB1) d'un signal représentatif dudit changement d'orientation par rapport à une orientation de référence correspondant à un instant de référence (t_{ref}), lesdits premiers moyens d'élaboration (ELAB1) comprenant des premiers moyens d'estimation (EST1) du produit vectoriel (V) du vecteur (A) des signaux de mesure transmis par l'accéléromètre (3A) et du vecteur (B) des signaux de mesure transmis par le magnétomètre (3M), et adaptés pour détecter un changement de signe dudit produit vectoriel (V), et des moyens de comparaison de la valeur du produit vectoriel actuelle (V(t)) avec la valeur du produit vectoriel à l'instant de référence (V(t_{ref})).

2. Système selon la revendication 1, dans lequel ledit instant de référence (t_{ref}) est fixe et lesdits premiers moyens de détection (DETEC1) sont adaptés pour détecter un changement d'orientation de ladite projection lorsque ledit signal représentatif change de position relative par rapport à un seuil.

3. Système selon la revendication 1, dans lequel ledit instant de référence (t_{ref}) est relatif, à partir de l'instant présent (t) décalé dans le passé d'une durée constante (T), et lesdits premiers moyens de détection (DETEC1) sont adaptés pour détecter un changement d'orientation de ladite projection lorsque ledit signal représentatif présente un pic supérieur ou inférieur à un seuil.

4. Système selon l'une des revendications précédentes, dans lequel lesdits premiers moyens d'élaboration (ELAB1) comprennent des deuxièmes moyens de calcul (CALC2) d'une portion angulaire séparant ledit produit vectoriel (V(t)) et un produit vectoriel de référence (V(t_{ref})) estimé par lesdits premiers moyens d'estimation (EST1) à un instant de référence (t_{ref}), et lesdits premiers moyens de détection (DETEC1) sont adaptés pour détecter un changement d'orientation de ladite projection à partir de ladite portion angulaire calculée par lesdits deuxièmes moyens de calcul (CALC2) et d'un deuxième seuil.

5. Système selon l'une des revendications précédentes, adapté pour compter le nombre de changements de direction d'un nageur dans une piscine, dans lequel ledit boîtier (BT) est étanche, et dans lequel ledit changement d'orientation correspond à un changement de sens de traversée de la piscine.

6. Système selon la revendication 5, comprenant des deuxièmes moyens de détection (DETEC2) d'un changement de signe du vecteur d'accélération mesuré par ledit accéléromètre (3A) représentatif d'un changement entre une nage ventrale et une nage dorsale du nageur.

7. Système selon la revendication 6, dans son rattachement à la revendication 2 ou 3, dans lequel lesdits deuxièmes moyens de détection (DETEC2) comprennent des douzièmes moyens de calcul (CALC12) de la somme des carrés des composantes de la somme d'un vecteur d'accélération (A(t)) mesuré par ledit accéléromètre (3A) et d'un vecteur d'accélération de référence (A(t_{ref})) mesuré par ledit accéléromètre (3A) à un instant de référence (t_{ref}), et lesdits deuxièmes moyens de détection (DETEC2) sont adaptés pour détecter un changement entre une nage ventrale et une nage dorsale du nageur à partir de ladite somme calculée par lesdits douzièmes moyens de calcul (CALC12) et d'un sixième seuil, lesdits vecteurs étant normalisés.

8. Système selon la revendication 6, dans son rattachement à la revendication 2 ou 3, dans lequel lesdits deuxièmes moyens de détection (DETEC2) comprennent des treizièmes moyens de calcul (CALC13) d'une portion angulaire séparant ledit vecteur d'accélération (A(t)) mesuré par ledit accéléromètre (3A) et un vecteur d'accélération de référence (A(t_{ref})) mesuré par ledit accéléromètre (3A) à un instant de référence (t_{ref}), et lesdits deuxièmes moyens de détection (DETEC2) sont adaptés pour détecter un changement entre une nage ventrale et une nage dorsale du nageur à partir de ladite portion angulaire calculée par lesdits treizièmes moyens (CALC13) de calcul et d'un septième seuil.

9. Système selon la revendication 6, dans son rattachement à la revendication 2 ou 3, dans lequel lesdits deuxièmes moyens de détection (DETEC2) comprennent des quatorzièmes moyens de calcul (CALC14) d'un produit scalaire dudit vecteur d'accélération (A(t)) mesuré par ledit accéléromètre (3A) et d'un vecteur d'accélération de référence (A(t_{ref})) mesuré par ledit accéléromètre (3A) à un instant de référence (t_{ref}), et lesdits deuxièmes moyens de détection (DETEC2) sont adaptés pour détecter un changement entre une nage ventrale et une nage dorsale du nageur à partir dudit produit scalaire calculé par lesdits quatorzièmes moyens de calcul (CALC14) et d'un huitième seuil, lesdits vecteurs étant normalisés.

10. Système selon l'une des revendications 6 à 9, dans lequel lesdits deuxièmes moyens de détection (DETEC2) sont adaptés pour mettre à jour un instant de référence fixe (t_{ref}) dès une détection d'un changement entre une nage ventrale et une nage dorsale du nageur.

11. Système selon l'une des revendications précédentes, comprenant, en outre, des moyens de filtrage (FILT) passe-bas ou par moyenne sur une fenêtre glissante.

12. Procédé de comptage de changements de direction d'une personne, **caractérisé en ce qu'**il comprend les étapes consistant à :
- mesurer la direction du champ magnétique terrestre dans le repère d'un boîtier (BT) lié solidairement à une partie du corps de ladite personne, ledit boîtier comprenant un magnétomètre triaxial calibré (3M) apte à fournir des mesures du champ magnétique terrestre à un endroit donné ;
- déterminer une grandeur représentative de l'inclinaison du champ magnétique mesuré par rapport à la verticale à partir d'un accéléromètre (3A) calibré à trois axes de mesure fixé (FIX) dans une orientation relative par rapport audit magnétomètre (3M) sensiblement constante, et déterminer ladite grandeur représentative de ladite inclinaison à partir des mesures dudit accéléromètre (3A) ; et
- détecter un changement d'orientation d'une projection orthogonale de ladite direction du champ magnétique terrestre dans un repère plan horizontal d'axes de directions constantes lié en translation à ladite personne, à partir de ladite direction mesurée du champ magnétique et de ladite grandeur représentative de l'inclinaison du champ magnétique par rapport à la verticale, en élaborant (ELAB1) un signal représentatif dudit changement d'orientation par rapport à une orientation de référence correspondant à un instant de référence (t_{ref}), ladite élaboration (ELAB1) comprenant une estimation (EST1) du produit vectoriel (V) du vecteur (A) des signaux de mesure transmis par l'accéléromètre (3A) et du vecteur (B) des signaux de mesure transmis par le magnétomètre (3M), et la détection d'un changement de signe dudit produit vectoriel (V), et en comparant la valeur du produit vectoriel actuelle (V(t)) avec la valeur du produit vectoriel à l'instant de référence (V(t_{ref})).

## Patentansprüche

1. System zum Zählen der Richtungswechsel einer Person, beinhaltend ein Gehäuse (BT) und Befestigungsmittel (EF) zum festen Verbinden des Gehäuses (BT) mit einem Körperteil der Person, **dadurch gekennzeichnet, dass** es Folgendes beinhaltet:
- Mittel zum Messen der Richtung des Erdmagnetfeldes in dem Koordinatensystem des Gehäuses, welche ein kalibriertes dreiachsiges Magnetometer (3M) beinhalten, welches in der Lage ist, Messungen des Erdmagnetfeldes an einer gegebenen Position bereitzustellen;
- Mittel zum Bestimmen (DET_INC) einer Größe, welche die Neigung des gemessenen Magnetfeldes zur Vertikalen darstellt, welche einen kalibrierten Beschleunigungsmesser (3A) mit drei Messachsen beinhalten, welcher mit Befestigungsmitteln (FIX) versehen ist, welche geeignet sind, den Beschleunigungsmesser (3A) in einer im Wesentlichen konstanten relativen Ausrichtung in Bezug auf das Magnetometer (3M) zu halten, und geeignet sind, die die Neigung darstellende Größe anhand der Messungen des Beschleunigungsmessers (3A) zu bestimmen; und
- erste Mittel zum Erkennen (DETEC1) eines Ausrichtungswechsels einer orthogonalen Projektion der Erdmagnetfeldrichtung in einem horizontalen, ebenen Koordinatensystem von konstanten Richtungsachsen, welches in Bewegung mit der Person verbunden ist, anhand der gemessenen Richtung des Magnetfeldes und der die Neigung des Magnetfeldes zur Vertikalen darstellenden Größe, beinhaltend erste Mittel zum Erzeugen (ELAB1) eines Signals, welches den Ausrichtungswechsel zu einer Referenzausrichtung darstellt, welche einem Referenzzeitpunkt (t_{ref}) entspricht, wobei die ersten Mittel zum Erzeugen (ELAB1) erste Schätzmittel (EST1) des Vektorprodukts (V) des Vektors (A) der durch den Beschleunigungsmesser (3A) übertragenen Messsignale und des Vektors (B) der vom Magnetometer (3M) übertragenen Messsignale beinhalten, und geeignet sind, einen Zeichenwechsel des Vektorprodukts (V) zu erkennen, und Mittel zum Vergleichen des aktuellen Wertes des Vektorprodukts (V(t)) mit dem Wert des Vektorprodukts zum Referenzzeitpunkt (V(t_{ref})).

2. System nach Anspruch 1, bei welchem der Referenzzeitpunkt (t_{ref}) fest ist und die ersten Erkennungsmittel (DETEC1) geeignet sind, einen Ausrichtungswechsel der Projektion zu erkennen, wenn das repräsentative Signal die relative Position in Bezug auf einen Schwellenwert wechselt.

3. System nach Anspruch 1, bei welchem der Referenzzeitpunkt (t_{ref}) relativ ist, ab dem augenblicklichen Zeitpunkt (t), welcher um eine konstante Dauer (T) in die Vergangenheit verschoben ist, und die ersten Erkennungsmittel (DETEC1) geeignet sind, einen Ausrichtungswechsel der Projektion zu erkennen, wenn das repräsentative Signal einen Spitzenwert aufweist, welcher einen Schwellenwert überschreitet oder unterschreitet.

4. System nach einem der vorhergehenden Ansprüche, bei welchem die ersten Erzeugungsmittel (ELAB1) zweite Berechnungsmittel (CALC2) eines Winkelabschnittes beinhalten, welcher das Vektorprodukt (V(t)) und ein Referenz-Vektorprodukt (V(t_{ref})) trennt, welches durch die ersten Schätzmittel (EST1) zu einem Referenzzeitpunkt (t_{ref}) geschätzt wird, und die ersten Erkennungsmittel (DETEC1) geeignet sind, einen Ausrichtungswechsel der Projektion anhand des durch die zweiten Berechnungsmittel (CALC2) berechneten Winkelabschnittes und eines zweiten Schwellenwertes zu erkennen.

5. System nach einem der vorhergehenden Ansprüche, welches geeignet ist, die Anzahl der Richtungswechsel eines Schwimmers in einem Schwimmbecken zu zählen, wobei das Gehäuse (BT) wasserdicht ist, und bei welchem der Ausrichtungswechsel einem Richtungswechsel beim Durchqueren des Schwimmbeckens entspricht.

6. System nach Anspruch 5, beinhaltend zweite Erkennungsmittel (DETEC2) eines Zeichenwechsels des durch den Beschleunigungsmesser (3A) gemessenen Vektors, welcher einen Wechsel zwischen einer Bauchschwimmlage und einer Rückenschwimmlage des Schwimmers darstellt.

7. System nach Anspruch 6, betrachtet in Verbindung mit Anspruch 2 oder 3, bei welchem die zweiten Erkennungsmittel (DETEC2) zwölfte Berechnungsmittel (CALC12) der Summe der Quadrate der Komponenten der Summe eines Beschleunigungsvektors (A(t)), welcher durch den Beschleunigungsmesser (3A) gemessen wird, und eines Referenz-Beschleunigungsvektors (A(t_{ref})), welcher durch den Beschleunigungsmesser (3A) zu einem Referenzzeitpunkt (t_{ref}) gemessen wird, und wobei die zweiten Erkennungsmittel (DETEC2) geeignet sind, einen Wechsel zwischen einer Bauchschwimmlage und einer Rückenschwimmlage des Schwimmers anhand der durch die zwölften Berechnungsmittel (CALC12) berechneten Summe und eines sechsten Schwellenwertes zu erkennen, wobei die Vektoren normalisiert sind.

8. System nach Anspruch 6, betrachtet in Verbindung mit Anspruch 2 oder 3, bei welchem die zweiten Erkennungsmittel (DETEC2) dreizehnte Berechnungsmittel (CALC13) eines Winkelabschnittes beinhalten, welcher den Beschleunigungsvektor (A(t)), welcher durch den Beschleunigungsmesser (3A) gemessen wird, und einen Referenz-Beschleunigungsvektor (A(t_{ref})) trennt, welcher durch den Beschleunigungsmesser (3A) zu einem Referenzzeitpunkt (t_{ref}) gemessen wird, und wobei die zweiten Erkennungsmittel (DETEC2) geeignet sind, einen Wechsel zwischen einer Bauchschwimmlage und einer Rückenschwimmlage des Schwimmers anhand des durch die dreizehnten Berechnungsmittel (CALC13) berechneten Winkelabschnittes und eines siebenten Schwellenwertes zu erkennen.

9. System nach Anspruch 6, betrachtet in Verbindung mit Anspruch 2 oder 3, bei welchem die zweiten Erkennungsmittel (DETEC2) vierzehnte Berechnungsmittel (CALC14) eines Skalarprodukts des Beschleunigungsvektors (A(t)) beinhalten, welcher durch Beschleunigungsmesser (3A) gemessen wird, und eines Referenz-Beschleunigungsvektors (A(t_{ref})), welcher durch den Beschleunigungsmesser (3A) zu einem Referenzzeitpunkt (t_{ref}) gemessen wird, und wobei die zweiten Erkennungsmittel (DETEC2) geeignet sind, einen Wechsel zwischen einer Bauchschwimmlage und einer Rückenschwimmlage des Schwimmers anhand des Skalarprodukts zu erkennen, welches durch die vierzehnten Berechnungsmittel (CALC14) berechnet wird, und anhand eines achten Schwellenwertes, wobei die Vektoren normalisiert sind.

10. System nach einem der Ansprüche 6 bis 9, bei welchem die zweiten Erkennungsmittel (DETEC2) geeignet sind, einen festen Referenzzeitpunkt (t_{ref}) bei einer Erkennung eines Wechsels zwischen einer Bauchschwimmlage und einer Rückschwimmlage des Schwimmers zu aktualisieren.

11. System nach einem der vorhergehenden Ansprüche, welches zudem Tiefpass-Filtermittel (FILT) bzw. Filter mit Mittelung über ein gleitendes Fenster beinhaltet.

12. Verfahren zum Zählen der Richtungswechsel einer Person, **dadurch gekennzeichnet, dass** es folgende Schritte beinhaltet:
- Messen der Richtung des Erdmagnetfeldes in dem Koordinatensystem eines Gehäuses (BT), welches fest mit einem Körperteil der Person verbunden ist, wobei das Gehäuse ein kalibriertes dreiachsiges Magnetometer (3M) beinhaltet, welches in der Lage ist, Messungen des Erdmagnetfeldes an einer gegebenen Position bereitzustellen;
- Bestimmen einer Größe, welche die Neigung des gemessenen Magnetfeldes zur Vertikalen darstellt, anhand eines Beschleunigungsmessers (3A), welcher kalibriert ist, mit drei Messachsen versehen und in einer im Wesentlichen konstanten relativen Ausrichtung zum Magnetometer (3M) befestigt (FIX) ist, und Bestimmen der die Neigung darstellende Größe anhand der Messungen des Beschleunigungsmessers (3A); und
- Erkennen eines Ausrichtungswechsels einer orthogonalen Projektion der Erdmagnetfeldrichtung in einem horizontalen, ebenen Koordinatensystem mit konstanten Richtungsachsen, welches in Bewegung mit der Person verbunden ist, anhand der gemessenen Richtung des Magnetfeldes und der die Neigung des Magnetfeldes zur Vertikalen darstellenden Größe, durch Erzeugen (ELAB1) eines Signals, welches den Ausrichtungswechsel zu einer Referenzausrichtung darstellt, welche einem Referenzzeitpunkt (t_{ref}) entspricht, wobei die Erzeugung (ELAB1) eine Schätzung (EST1) des Vektorprodukts (V) des Vektors (A) der durch den Beschleunigungsmesser (3A) übertragenen Messsignale und des Vektors (B) der vom Magnetometer (3M) übertragenen Messsignale, und das Erkennen eines Zeichenwechsels des Vektorprodukts (V) beinhaltet, und durch Vergleichen des aktuellen Wertes des Vektorprodukts (V(t)) mit dem Wert des Vektorprodukts zum Referenzzeitpunkt (V(t_{ref})).

## Claims

1. A system for counting changes of direction of a person, comprising a housing (BT) and fixing means (EF) for securely binding said housing (BT) to a body part of said person, **characterized in that** it comprises :
- means for measuring the direction of the terrestrial magnetic field in the reference frame of the housing comprising a calibrated triaxial (3M) magnetometer capable of providing measurements of the terrestrial magnetic field at a given location;
- means for determining (DET_INC) a quantity representative of the inclination of the magnetic field measured with respect to vertical, comprising a calibrated accelerometer (3A) with three measurement axes provided with fixing means (FIX) configured to keep said triaxial accelerometer (3A) in substantially constant relative orientation with respect to said magnetometer (3M), and configured to determine said representative quantity of said inclination on the basis of the measurements of said accelerometer (3A); and
- first detection means (DETEC1) for detecting a change of orientation of an orthogonal projection of said direction of the earth magnetic field in a horizontal planar reference frame of axes of constant directions connected in translation to said person, on the basis of said measured direction of the magnetic field and said quantity representative of the inclination of the magnetic field with respect to the vertical, comprising first producing means (ELAB1) for producing a signal representative of said change of orientation relative to a reference orientation corresponding to a reference instant (t_{ref}), said first elaboration means (ELAB1) comprising first estimation means (EST1) of the vector product (V) of the vector (A) of the measurement signals transmitted by the accelerometer (3A) and of the vector (B) of the measurement signals transmitted by the magnetometer (3M), and configured to detect a change of sign of said vector product (V), and means for comparing the current value of the vector product (V(t)) with the value of the vector product at reference instant (V(t_{ref})).

2. System according to claim 1, wherein said reference instant (t_{ref}) is fixed and said first detection means (DETEC1) are configured to detect a change of orientation of said projection when said representative signal changes relative position with respect to a threshold.

3. System according to claim 1, wherein said reference instant (t_{ref}) is relative, from the present instant (t) shifted into the past by a constant duration (T), and said first detection means (DETEC1) are configured to detect a change of orientation of said projection when said representative signal exhibits a peak greater than or less than a threshold.

4. System according to any one of the preceding claims, wherein said first elaboration means (ELAB1) comprise second calculation means (CALC2) of an angular portion separating said vector product (V(t)) and a reference vector product (V(t_{ref})) estimated by said first estimation means (EST1) at a reference instant (t_{ref}), and said first detection means (DETEC1) are configured to detect a change of orientation of said projection from said angular portion calculated by said second calculation means (CALC2) and a second threshold.

5. System according to one of the preceding claims, configured to count a number of changes of direction of a swimmer in a pool, wherein said housing (BT) is waterproof, and wherein said change of orientation corresponds to a change of direction of crossing of the pool.

6. System according to claim 5, comprising second detection means (DETEC2) for detecting a change of sign of the acceleration vector measured by said accelerometer (3A) representative of a change between a front stroke and a backstroke of the swimmer.

7. System according to claim 6, in its connection to claim 2 or 3, wherein said second detection means (DETEC2) comprise twelfth calculation means (CALC12) for calculating the sum of the squares of the components of a sum of an acceleration vector (A(t)) measured by said accelerometer (3A) and of a reference acceleration vector (A(t_{ref})) measured by said accelerometer (3A) at a reference instant (t_{ref}), and said second detection means (DETEC2) are configured to detect a change between a front stroke and a backstroke of the swimmer from said sum calculated by said twelfth calculation means (CALC12) and a sixth threshold, said vectors being normalized.

8. System according to claim 6, in its connection to claim 2 or 3, wherein said second detection means (DETEC2) comprise thirteenth calculating means (CALC13) for calculating an angular portion separating said acceleration vector (A(t)) measured by said accelerometer (3A) and a reference acceleration vector (A(t_{ref})) measured by said accelerometer (3A) at a reference instant (t_{ref}), and said second detection means (DETEC2) are configured to detect a change between a front stroke and a backstroke of the swimmer on a basis of said angular portion calculated by said thirteenth calculation means (CALC13) and a seventh threshold.

9. System according to claim 6, in its connection to claim 2 or 3, wherein said second detection means (DETEC2) comprise fourteenth calculating means (CALC14) for calculating a scalar product of said acceleration vector (A(t)) measured by said accelerometer (3A) and of a reference acceleration vector (A(t_{ref})) measured by said accelerometer (3A) at a reference instant (t_{ref}), and said second detection means (DETEC2) are configured to detect a change between a front stroke and a backstroke of the swimmer on a basis of said scalar product calculated by said fourteenth calculating means (CALC14) and an eighth threshold, said vectors being normalized.

10. System according to one of claims 6 to 9, wherein said second detection means (DETEC2) are configured to update a fixed reference instant (t_{ref}) upon detection of a change between a front stroke and a backstroke of the swimmer.

11. System according to one of the preceding claims, further comprising low-pass or average-based means of filtering (FILT) over a sliding window.

12. A method of counting changes of direction of a person, **characterized in that** it comprises the steps of:
- measuring the direction of the terrestrial magnetic field in the reference frame of a housing (BT) securely coupled to a body part of said person, said housing comprising a calibrated triaxial (3M) magnetometer able to provide measurements of the terrestrial magnetic field at a given place;
- determining a quantity representative of the inclination of the measured magnetic field with respect to the vertical on the basis of a calibrated accelerometer (3A) with three fixed measurement axes (FIX) in substantially constant relative orientation with respect to said magnetometer (3M), and determining said representative quantity of said inclination from the measurements of said accelerometer (3A); and
- detecting a change of orientation of an orthogonal projection of said direction of the earth magnetic field in a horizontal planar reference frame having axes of constant directions in translation to said person, on the basis of said measured direction of the magnetic field and said quantity representative of the inclination of the magnetic field with respect to the vertical, by producing (ELAB1) a signal representative of said change of orientation with respect to a reference orientation corresponding to a reference instant (t_{ref}), said elaboration (ELAB1) comprising an estimate (EST1) of the vector product (V) of the vector (A) of the measurement signals transmitted by the accelerometer (3A) and of the vector (B) of the measurement signals transmitted by the magnetometer (3M), and the detection of a change of sign of said vector product (V), and comparing the current value of the vector product (V(t)) with the value of the vector product at the reference instant (V(t_{ref})).
